# FASCICULE DE BREVET EUROPEEN

(11) **EP 2 499 000 B1**
(45) Date de publication et mention de la délivrance du brevet: **05.07.2017**
(21) Numéro de dépôt: 10779525.4
(22) Date de dépôt: 09.11.2010
(51) Int. Cl.: B42D 15/00, G06K 19/08, G06K 19/10, H04N 1/32, B42D 25/00, B42D 25/23, B42D 25/309

(54) **DOCUMENTS D'IDENTITE COMPORTANT UNE PHOTOGRAPHIE D'IDENTITE SECURISEE AU MOYEN DE MOTIFS**
IDENTITÄTSDOKUMENTE, DIE EINE MIT HILFE VON MOTIVEN GESICHERTE IDENTITÄTSFOTOGRAFIE UMFASSEN
IDENTIFICATION DOCUMENTS CONTAINING AN IDENTIFICATION PHOTOGRAPH SECURED BY MEANS OF PATTERNS

(30) Priorité: 12.11.2009 EP 09306087
(43) Date de publication de la demande: 19.09.2012
(73) Titulaire: Gemalto SA, 92190 Meudon (FR)
(72) Inventeur: DIDELOT, Florian, F-92197 Meudon (FR)
(74) Mandataire: Cassagne, Philippe M.J.
(86) Numéro de dépôt international: PCT/EP2010/067122
(87) Numéro de publication internationale: WO 2011/058012

(56) Documents cités:
- EP-A- 1 318 486
- EP-A- 1 684 494
- EP-A2- 0 660 260
- GB-A- 2 451 482
- US-A- 6 095 566
- US-A1- 2003 231 785
- US-A1- 2005 072 846
- US-A1- 2005 109 846

## Description

L'invention concerne les documents d'identité, et en particulier la sécurisation de documents d'identité tels que des cartes d'identité, des permis de conduire ou des passeports, contre une altération ou une fabrication frauduleuses.

Les documents d'identité comprennent usuellement une photographie d'identité de son détenteur. Les documents d'identité comprennent en outre un certain nombre de mentions alphanumériques, telles que le nom du détenteur, sa date de naissance, sa taille, son adresse, le numéro du document, la date de délivrance du document ou l'identité de l'autorité ayant délivré le document.

Les photographies d'identité comportent fréquemment des guilloches ou des surimpressions. Ces guilloches forment un réseau de lignes superposées à la photographie et visibles à l'oeil nu. Les guilloches sont destinées à rendre discernable lors d'un contrôle d'identité toute modification frauduleuse de la photographie. Les guilloches permettent notamment de se prémunir contre des modifications de teinte de la photographie, par exemple lors de l'ajout d'une barbe ou de cheveux. Ainsi, les guilloches permettent de façon souple de mettre en oeuvre des contrôles de sécurité de niveau 1 (contrôle visuel à l'oeil nu) ou de niveau 2 (contrôle visuel avec un simple appareillage optique tel qu'une loupe ou une lampe ultraviolet).

Les guilloches n'apportant qu'un supplément de sécurité relatif contre les modifications de l'image et ne permettant pas de se prémunir contre des altérations des mentions alphanumériques, d'autres systèmes de protection des documents d'identité sont généralement mis en oeuvre.

Les techniques de tatouage numérique (désigné par le terme watermarking en langue anglaise) sont destinées à intégrer des éléments invisibles à l'oeil nu dans une photographie d'identité, ces éléments codant des informations prédéfinies. Le tatouage numérique fournit une sécurité de niveau 3 lors d'un contrôle. Ainsi, au moyen d'un l'appareillage de traitement et d'analyse numérique, la photographie d'identité est analysée pour extrapoler les données qui y sont tatouées. Une vérification de la cohérence de ces données est ensuite effectuée.

En pratique, le tatouage numérique présente un certain nombre d'inconvénients. D'une part, le tatouage numérique ne permet pas de mettre en oeuvre une sécurité de niveau 1 ou 2, ce qui limite les contrôles de sécurité à du personnel muni de moyens importants, ce qui est par exemple délicat pour des contrôles itinérants. D'autre part, le décodage du tatouage numérique implique l'exécution d'un grand nombre de calculs basés sur des transformations de Fourier. Ces calculs s'avèrent relativement longs et complexes, rendant le processus de vérification d'identité excessivement long. Par ailleurs, les tatouages numériques peuvent s'avérer sensibles aux dégradations du document d'identité, dégradations qui peuvent être induites par un manque de soins de la part du détenteur pendant la durée de validité relativement longue du document. L'analyse des tatouages numériques dégradés peut alors aboutir à une lecture erronée des tatouages, ou bien à une impossibilité de lecture lors du contrôle. Le contrôle de sécurité devra donc reposer sur d'autres éléments d'authentification, annulant immédiatement l'utilité du tatouage numérique.

Les documents US6095566, US2005/109846, US2005/072846, EP1318486, EP1684494 et GB2451482 font partie de l'état de l'art.

L'invention vise à résoudre un ou plusieurs de ces inconvénients. L'invention porte ainsi sur un procédé de sécurisation d'un document d'identité comportant une photographie d'identité et des mentions alphanumériques relatives au détenteur du document d'identité, comprenant les étapes de :
- collecte d'informations alphanumériques parmi les mentions alphanumériques destinées à figurer sur le document d'identité ;
- coder les informations alphanumériques collectées par des propriétés de motifs destinés à figurer dans des zones prédéterminées de la photographie d'identité, les motifs étant susceptibles de révéler une éventuelle altération de la photographie d'identité ;
- réaliser le document d'identité de sorte qu'il comporte lesdites mentions alphanumériques, et de sorte qu'il comporte la photographie d'identité sur laquelle figurent de façon visible les motifs avec lesdites propriétés dans lesdites zones prédéterminées.

L'invention se caractérise par des motifs qui sont constitués de lignes superposée avec la photographie d'identité et présentant des intersections de lignes, et en ce que lesdites informations alphanumériques collectées sont codées par la présence et la non-présence d'intersections des motifs dans lesdites zones prédéterminées.

Selon encore une variante, les motifs réalisés sur la photographie d'identité sont visibles à l'oeil nu.

Selon une autre variante, le procédé comprend l'analyse des coloris ou de l'intensité des zones prédéterminées de la photographie d'identité, et comprend la réalisation des motifs avec un contraste de coloris ou d'intensité par rapport à la photographie d'identité dans les zones prédéterminées.

Selon encore une variante, le document d'identité comporte une puce, le procédé comportant une étape d'écriture des mentions alphanumériques, des informations alphanumériques collectées, de l'emplacement des zones prédéterminées, et/ou de la photographie d'identité dans la puce.

Selon encore une autre variante, l'étape de codage par des propriétés de motifs est précédée d'une étape de chiffrement des informations collectées.

Selon une variante, les zones prédéterminées de la photographie d'identité présentent une densité variable en différents emplacements de la photographie d'identité.

Selon encore une variante, les zones prédéterminées présentent une densité moindre au niveau des yeux de la photographie d'identité.

Selon une autre variante, le procédé comprend les étapes de :
- analyser numériquement la photographie d'identité pour en extraire des statistiques d'image ;
- coder dans certaines des zones prédéterminées les statistiques d'image extraites par des propriétés de motifs.

L'invention porte également sur un système de test d'authenticité d'un document d'identité, comprenant :
- un dispositif de saisie numérique d'image ;
- un module de traitement apte à déterminer des informations alphanumériques sur une image saisie et apte à identifier des propriétés de motifs dans des zones prédéterminées d'une image saisie, les motifs étant susceptibles de révéler une éventuelle altération de la photographie d'identité ;
- un module d'authentification, indiquant au module de traitement des zones prédéterminées à analyser pour l'identification des propriétés des motifs dans ces zones, décodant des informations codées par les propriétés de ces motifs, comparant les informations issues de l'image saisie aux informations décodées, et générant un signal représentatif de l'authenticité en fonction du résultat de la comparaison.

Selon une variante, le système comprend en outre un dispositif de lecture d'une puce du document d'identité, le module d'authentification comparant les informations décodées à des informations mémorisées dans la puce et générant un signal représentatif de l'authenticité en fonction du résultat de cette comparaison.

L'invention porte par ailleurs sur un document d'identité réalisé suivant le procédé mentionné précédemment. D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un document d'identité selon l'invention ;
- la figure 2 représente une matrice de points d'intersection de motifs destinée à coder des informations alphanumériques ;
- la figure 3 représente schématiquement un exemple de procédé d'édition d'une photographie d'identité codant des informations numériques au moyen de motifs ;
- les figures 4 à 6 représentent différentes variantes de tracés de motifs ;
- la figure 7 représente un exemple de procédé de fabrication d'une carte selon l'invention ;
- la figure 8 représente un exemple de procédé de test de l'authenticité du document d'identité ;
- la figure 9 représente un système de vérification de l'authenticité d'un document d'identité.

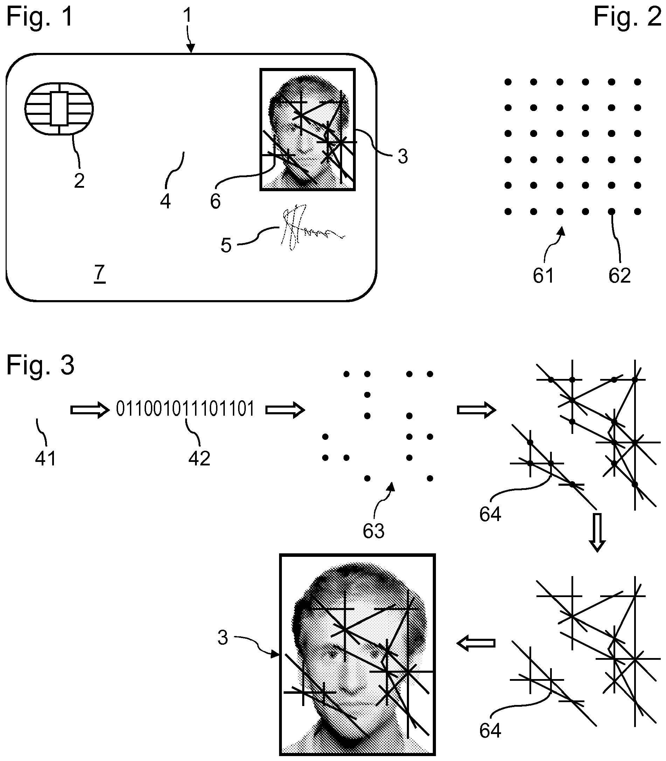

La figure 1 représente un exemple de document d'identité 1 selon un mode de réalisation de l'invention. Le document d'identité 1 comprend un support 7, réalisé en matériau synthétique, en matériau fibreux ou selon une combinaison de matériaux synthétiques et de matériau fibreux. Le document d'identité 1 comporte une photographie d'identité 3 de son détenteur. Le document d'identité 1 comporte également des mentions alphanumériques de personnalisation 4 visibles, telles que les noms et prénoms du détenteur, sa date de naissance ou le numéro du document d'identité. Le document d'identité 1 comporte par ailleurs la signature 5 de son détenteur. Une puce 2 est en outre avantageusement fixée sur ou dans le support 7 de façon connue en soi. La puce comprend typiquement un microcontrôleur muni d'une interface de communication, d'un processeur de traitement, d'une mémoire non volatile et d'une mémoire vive. Des motifs 6 visibles sont présents sur la photographie d'identité 3. Les motifs 6 forment en l'occurrence des guilloches. Les motifs 6 sont avantageusement réalisés sur la photographie d'identité 3 de sorte que toute tentative de modification des motifs induit une détérioration de l'aspect de cette photographie 3. Les motifs 6 sont donc susceptibles de révéler une altération éventuelle de l'aspect de la photographie d'identité.

La figure 2 représente une grille ou matrice 61 définissant un ensemble de zones ponctuelles ou zones de codage 62 dans lesquelles les propriétés des motifs codent des informations issues des mentions alphanumériques 4. Les zones 62 sont localisées à des positions prédéfinies, aux intersections d'un quadrillage rectangulaire dans l'exemple illustré. Les propriétés des motifs au niveau des zones ponctuelles 62 permettent de coder des informations alphanumériques collectées à partir des mentions alphanumériques 4. Dans l'exemple détaillé par la suite, les propriétés des motifs 6 servant au codage des informations alphanumériques seront la présence ou non d'une intersection entre des lignes de motifs au niveau des zones ponctuelles 62.

La figure 3 fournit un exemple simplifié d'un processus aboutissant à la formation de motifs 6 sur la photo d'identité 3 du document d'identité 1. Dans une première étape, on collecte le nom 41 du détenteur parmi les mentions alphanumériques 4. Le nom 41 du détenteur est codé pour former un code binaire 42 sur un nombre de bits prédéfinis. Chaque bit du code 42 correspond à une zone ponctuelle 62 de la grille 61. Une matrice de points d'intersection 63 est générée en conservant les zones ponctuelles 62 définissant des points d'intersection des lignes des motifs. Une valeur 1 du code binaire 42 sera codée par un point d'intersection 63 au niveau d'une zone ponctuelle 62 associée, tandis qu'une valeur 0 du code binaire 42 sera codée par l'absence de point d'intersection au niveau de la zone ponctuelle 62 associée. Ensuite, des lignes de motifs 64 sont tracées, de sorte que plusieurs lignes 64 se croisent au niveau des points d'intersection 63, et de sorte qu'au plus une ligne passe par chaque zone ponctuelle 62 dépourvue de point d'intersection 63. Dans l'exemple illustré, les lignes 64 sont rectilignes. Les lignes des motifs 6 pourront par exemple être tracées de façon connue en soi par une méthode de triangulation Delaunay entre les points d'intersection 63. Les motifs 6 générés sont ensuite superposés sur la photographie d'identité 3. Les motifs 6 peuvent être superposés à la photographie d'identité 3 sous forme numérique, avant d'apposer la photographie d'identité 3 transformée sur le support 7. Lorsque les motifs 6 sont ajoutés sur la photographie d'identité 3 avant son transfert sur le support 7, le surcoût d'une telle protection supplémentaire est extrêmement réduit. On peut également envisager de rapporter les motifs formés par tout moyen approprié sur une photographie d'identité 3 déjà imprimée sur le support 7.

L'utilisation des motifs 6 pour coder des informations issues des mentions alphanumériques 4 permet de réaliser un test d'authenticité en un temps réduit. Par exemple, l'identification des intersections des lignes 64 dans des zones prédéterminées permettra de comparer les données codées dans les motifs 6 avec les mentions alphanumériques 4 en se basant simplement sur une saisie numérique de la photographie d'identité 3 suivie de son traitement d'image, comme détaillé par la suite. Si on constate des incohérences entre les données extraites de la photographie d'identité 3 et les mentions alphanumériques 4, une altération ou une fabrication frauduleuse du document d'identité 1 peut être déduite.

Pour renforcer encore la sécurité d'un tel document d'identité 1, on peut également envisager de coder d'autres informations au moyen des motifs 6. On peut notamment envisager de coder des informations statistiques concernant la photographie d'identité 3, afin de pouvoir identifier des tentatives de fraudes par ajout ou suppression de détails présents entre les motifs, par exemple un grain de beauté, induisant alors une altération des statistiques de la photographie. Les informations statistiques peuvent par exemple concerner une caractérisation texturelle ou spectrale de la photographie d'identité 3.

Différentes mentions alphanumériques peuvent être collectées pour être codées par des motifs sur la photographie d'identité 3. Les mentions alphanumériques collectées pour être codées peuvent être des fragments de différents champs d'information. Par exemple, on pourra collecter un certain nombre de caractères du nom, des caractères du prénom, des caractères du numéro du document d'identité et/ou des caractères de la date ou du lieu de naissance du détenteur.

Afin d'accroître la robustesse et la vitesse de traitement des informations alphanumériques codées dans les motifs 6 lors d'une authentification, la matrice 61 pourra comprendre un nombre réduit de bits, par exemple de l'ordre de 160 bits.

Par ailleurs, la puce 2 est avantageusement sécurisée et mémorise les mentions alphanumériques 4. Ainsi, la puce 2 permet de vérifier que les informations alphanumériques 4 ou les motifs 6 n'ont pas été altérées frauduleusement, ce qui confère à la puce le rôle de double vérificateur. Il n'est par ailleurs pas nécessaire de mémoriser la photographie d'identité dépourvue des motifs 6 dans la puce 2 pour procéder au décodage des informations alphanumériques codées dans la photographie 3.

L'utilisation de motifs visibles permet de réaliser une vérification d'authenticité même lorsque la lecture de la puce 2 est impossible. Par exemple, en cas de désactivation ou de détérioration involontaire de la puce 2 du document d'identité 1, les autorités pourront accepter de se contenter du décodage des motifs 6 présents sur la photographie d'identité 3. Avantageusement, l'utilisation de motifs visibles à l'oeil nu dissuade des tentatives de fraude grossières et permet une vérification d'authentification visuelle, même en l'absence de matériel d'analyse de la photographie d'identité. Par ailleurs, des motifs 6 visibles à l'oeil nu rendent leur décodage particulièrement robuste à une usure du document d'identité 1, celui-ci n'étant pas toujours stocké dans des conditions optimales de conservation et devant rester utilisable pendant une durée de validité parfois très longue.

Les intersections des motifs 6 sont avantageusement contrastées par rapport à la photographie d'identité 3, afin de rester analysables suite à une saisie et un traitement numérique. Les motifs 6 pourront ainsi présenter un contraste de couleur ou une différence de luminosité importante par rapport à la photographie d'identité au niveau des intersections dans les zones de codage prédéterminées. Un tel contraste rend également l'authentification plus robuste face à des altérations éventuelles du document d'identité 1.

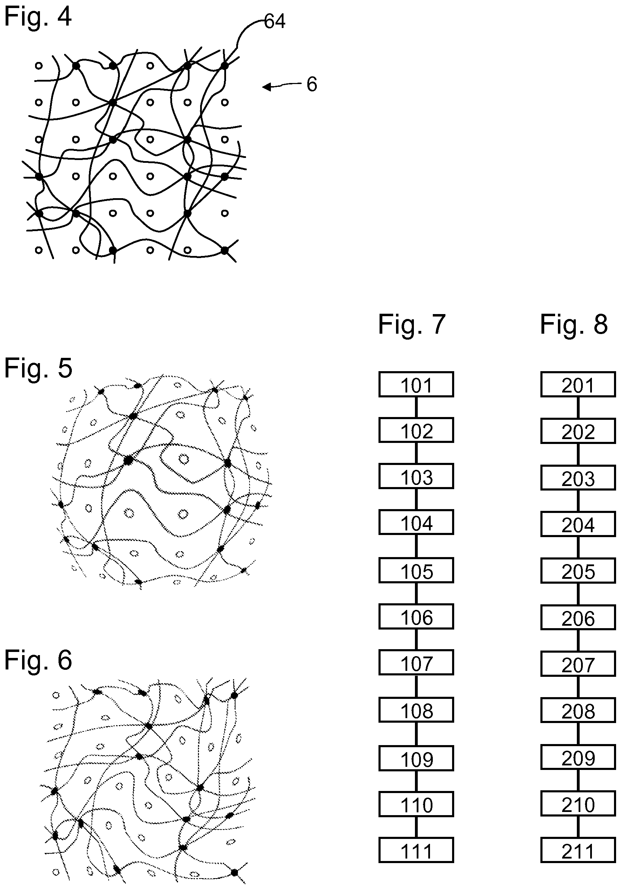

Dans les exemples illustrés aux figures 4 à 6, des cercles noircis identifient des zones prédéterminées codant une première valeur binaire, des cercles non remplis identifiant une deuxième valeur binaire. Ces cercles ne sont pas transcrits sur les motifs présents sur la photographie d'identité 3. Ces cercles sont uniquement illustrés pour faciliter la lecture des figures et permettre de voir le codage effectué au moyen des lignes 64.

Dans l'exemple de la figure 4, les lignes 64 formant les motifs 6 sont non rectilignes. De telles lignes 64 rendent plus difficile l'identification des intersections prises en compte pour le codage par un fraudeur potentiel. Les lignes 64 peuvent aussi prendre des courbures caractéristiques, par exemple sinusoïdales, permettant de discriminer des motifs contrefaits lors d'un contrôle de niveau 1 ou 2.

Dans l'exemple de la figure 5, la matrice définissant les zones d'intersection prises en compte pour le codage ont subi une déformation par sphérisation par rapport à la matrice de la figure 2. Une telle déformation peut avantageusement être utilisée pour réduire la densité des lignes dans certaines zones de la photographie devant rester peu altérées pour reconnaître le détenteur du document 1. Ainsi, la densité des lignes de motifs 6 au niveau du nez ou des yeux de l'utilisateur pourra être réduite. Dans l'exemple de la figure 6, la matrice définissant les zones d'intersection prises en compte pour le codage a subi une déformation en spirale par rapport à la matrice de la figure 2.

La figure 7 détaille un exemple de procédé de fabrication selon l'invention, mis en oeuvre au stade de la personnalisation d'un document d'identité 1. Lors d'une étape 101, on collecte des informations alphanumériques dans les mentions alphanumériques 4 destinées à figurer sur le document d'identité 1. Les informations alphanumériques collectées sont choisies parmi les mentions alphanumériques 4 selon des règles reproductibles, de sorte que l'authentification puisse être mise en oeuvre ultérieurement. Les informations collectées sont ensuite saisies sous forme numérique lors d'une étape 102, afin de pouvoir être soumises à des traitements numériques.

Lors d'une étape 103, les informations collectées sont soumises à une fonction de hachage pour générer une séquence binaire. La fonction de hachage permet de générer une séquence binaire d'une taille prédéfinie. Ainsi, même si les informations collectées sont relativement longues, la séquence binaire générée aura la taille adéquate pour son codage par une matrice 61. Une fonction de hachage permet en outre de chiffrer les informations collectées.

Lors d'une étape 104, la séquence binaire fait l'objet d'un procédé de chiffrement, de façon connue en soi. Le chiffrement génère une séquence binaire chiffrée. La capacité d'un fraudeur à déterminer comment coder sur la photographie les mentions alphanumériques qu'il souhaite imprimer sur la carte est ainsi réduite. Lors d'une étape 105, la séquence binaire chiffrée est transformée en matrice de points d'intersection 63, comme illustré à la figure 3. Lors d'une étape 106, on procède au traçage des lignes de motifs de sorte qu'elles forment des intersections au niveau des points 63. Le traçage est effectué de sorte que les autres zones ponctuelles 62 de la matrice ne comportent pas d'intersections de lignes de motifs.

Lors d'une étape 107, on réalise une déformation des motifs et des zones de codage prédéterminée, comme détaillé dans l'exemple des figures 5 et 6. La densité des zones de codage pourra ainsi être réduite dans des zones de la photographie d'identité présentant des détails à ne pas altérer. Lors d'une étape 108, l'intensité ou la couleur des motifs est adaptée en fonction de la photographie d'identité sur laquelle elles doivent être superposées. Un contraste visuel suffisant des motifs par rapport à la photographie est ainsi généré. Une ligne de motif sera par exemple claire au niveau d'une zone sombre de la photographie.

Lors d'une étape 109, une image est générée par superposition des motifs à la photographie d'identité. Lors d'une étape 110, des informations sont stockées dans la puce 2 du document d'identité. Ces informations peuvent contenir la photographie d'identité numérisée, avec et/ou sans motifs superposés, et/ou des statistiques d'analyse d'image concernant la photographie d'identité, et/ou les mentions alphanumériques 4. Lors d'une étape 111, le document d'identité 1 est formé en apposant la photographie d'identité 3 munie des motifs 6 sur le support 7, par impression ou par tout autre moyen approprié.

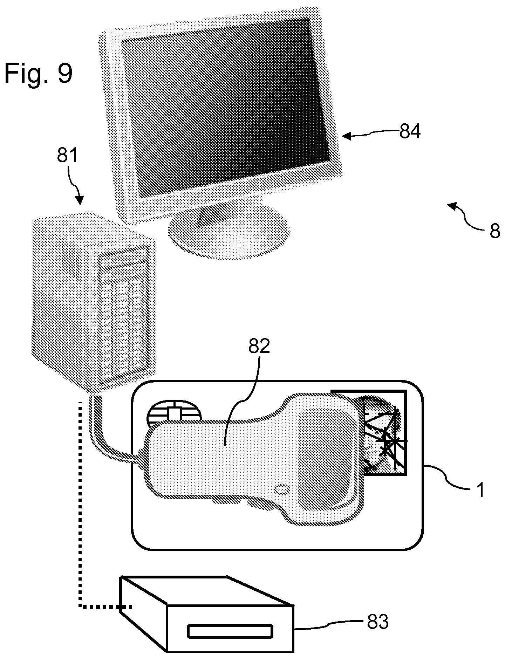

La figure 9 représente schématiquement un système d'authentification 8 d'un document d'identité 1. Le système d'authentification 8 comprend un terminal 81. Un scanner 82 est connecté au terminal 81. Un lecteur de carte à puce 83 est également connecté au terminal 81. Il peut s'agir d'un lecteur de carte à puce sans contact, en particulier pour lire la puce si celle-ci est masquée dans la couverture du document d'identité 1. Le terminal 81 est configuré pour exécuter une ou plusieurs applications de gestion de l'authentification.

Un exemple de procédé d'authentification est détaillé à la figure 8. Lors d'une étape 201, le document d'identité est scanné au moyen du scanner 82. En particulier, la photographie d'identité 3 et les mentions alphanumériques 4 sont numérisées. Une application de décodage exécutée sur le terminal 81 commande un certain nombre d'opérations de traitement d'image. Lors d'une étape 202, une application de traitement d'image identifie les mentions alphanumériques 4. Lors d'une étape 203, une application de traitement d'image détermine la présence ou non d'intersections de lignes de motifs 6 dans des emplacements prédéterminés fournis par l'application de décodage. Lors d'une étape 204, un code binaire est extrapolé en fonction des emplacements pour lesquels des intersections de motifs 6 ont été identifiés. Lors d'une étape 205, l'application de décodage collecte des informations alphanumériques parmi les mentions alphanumériques identifiées, conformément à un protocole de codage standardisé. Lors d'une étape 206, l'application de décodage génère un code binaire à partir des informations alphanumériques en appliquant ce protocole de codage standardisé. Lors d'une étape 207, le code binaire issu des informations alphanumériques et le code binaire extrapolé des motifs sont comparés. Lors d'une étape 208, les mentions alphanumériques mémorisées dans la puce 2 sont également avantageusement lues par le lecteur 83. Lors d'une étape 209, un code binaire est généré à partir d'informations alphanumériques lues dans la puce 2. Lors d'une étape 210, on compare les codes binaires issus de la puce 2 avec le code binaire extrapolé des motifs 6. Lors d'une étape 211, le résultat de l'authentification est affiché sur l'écran 84.

Ainsi, en partant d'un document d'identité 1 dans lequel les motifs codent des informations alphanumériques concernant le détenteur, on peut réaliser une authentification supplémentaire à partir du protocole de codage standardisé diffusé auprès des autorités. On peut également envisager que le type de codage et les emplacements des zones de codage de la photographie d'identité soient identifiés dans la puce 2.

Dans les modes de réalisation décrits dans les figures 1 à 6, les propriétés des motifs dans les zones de codage sont limitées à la présence ou non d'une intersection de motifs. Cependant, d'autres propriétés peuvent également être utilisées indépendamment ou en combinaison avec les intersections de motifs. On peut notamment envisager de réaliser un codage basé sur la position de l'intersection dans lesdites zones, basé sur la couleur de l'intersection des motifs, basé sur les angles entre les motifs au niveau de l'intersection ou encore basée sur les formes des motifs au niveau de l'intersection. On peut également envisager de réaliser un codage indépendant d'intersections de motifs, basé sur la couleur ou le contraste des motifs par rapport à la photographie d'identité en fond, ou encore un codage basé sur l'épaisseur des lignes des motifs dans les zones de codage.

La couleur ou la luminosité des motifs est avantageusement adaptée au fond sur lequel ils sont superposés. Ainsi, on pourra prévoir que les motifs présentent un contraste de couleur ou de luminosité par rapport à la photo d'identité. Les motifs sont ainsi aisément discernables à l'oeil nu lors de l'observation de la photographie d'identité. La couleur ou la luminosité d'un motif pourra également varier sur sa longueur en fonction du fond sur lequel il est superposé.

L'utilisation des motifs selon l'invention n'exclut pas l'utilisation d'autres motifs de sécurité en supplément, tels que des tatouages numériques.

Le document d'identité 1 illustré est en l'occurrence une carte à puce d'accès sécurisé. L'invention s'applique bien entendu à tout autre type de document d'identité, tel qu'un permis de conduire, un passeport ou une carte nationale d'identité.

## Revendications

1. Procédé de sécurisation d'un document d'identité (1) comportant une photographie d'identité (3) et des mentions alphanumériques (4) relatives au détenteur du document d'identité, comprenant les étapes de :
- collecte d'informations alphanumériques parmi les mentions alphanumériques (4) destinées à figurer sur le document d'identité ;
- coder les informations alphanumériques collectées par des propriétés de motifs destinés à figurer dans des zones prédéterminées de la photographie d'identité (3), les motifs étant susceptibles de révéler une éventuelle altération de la photographie d'identité ;
- réaliser le document d'identité de sorte qu'il comporte lesdites mentions alphanumériques (4), et de sorte qu'il comporte la photographie d'identité (3) sur laquelle figurent de façon visible les motifs (6) avec lesdites propriétés dans lesdites zones prédéterminées,
**caractérisé en ce que** les motifs sont constitués de lignes superposées avec la photographie d'identité et présentant des intersections de lignes, et **en ce que** lesdites informations alphanumériques collectées sont codées par la présence et la non-présence d'intersections des motifs dans lesdites zones prédéterminées (62).

2. Procédé de sécurisation d'un document d'identité selon la revendication 1, dans lequel la couleur ou la luminosité des motifs est avantageusement adaptée au fond sur lequel ils sont superposés.

3. Procédé de sécurisation d'un document d'identité selon la revendication 1, dans lequel les motifs (6) présentent un contraste de couleur ou de luminosité par rapport à la photographie d'identité (3) afin d'être facilement visibles à l'oeil nu.

4. Procédé de sécurisation d'un document d'identité selon l'une quelconque des revendications précédentes, comprenant l'analyse des coloris ou de l'intensité des zones prédéterminées de la photographie d'identité (3), et comprenant la réalisation des motifs (6) avec un contraste de coloris ou d'intensité par rapport à la photographie d'identité dans les zones prédéterminées.

5. Procédé de sécurisation d'un document d'identité selon l'une quelconque des revendications précédentes, dans lequel le document d'identité (1) comporte une puce (2), le procédé comportant une étape d'écriture des mentions alphanumériques, des informations alphanumériques collectées, de l'emplacement des zones prédéterminées, et/ou de la photographie d'identité dans la puce.

6. Procédé de sécurisation d'un document d'identité selon l'une quelconque des revendications précédentes, dans lequel l'étape de codage par des propriétés de motifs est précédée d'une étape de chiffrement des informations collectées.

7. Procédé de sécurisation d'un document d'identité selon l'une quelconque des revendications précédentes, dans lequel les zones prédéterminées de la photographie d'identité (3) présentent une densité variable en différents emplacements de la photographie d'identité.

8. Procédé de sécurisation d'un document d'identité selon la revendication 7, dans lequel les zones prédéterminées présentent une densité moindre au niveau des yeux de la photographie d'identité (3).

9. Procédé de sécurisation selon l'une quelconque des revendications précédentes, comprenant les étapes de :
- analyser numériquement la photographie d'identité pour en extraire des statistiques d'image ;
- coder dans certaines des zones prédéterminées les statistiques d'image extraites par des propriétés de motifs.

10. Système (8) de test d'authenticité d'un document d'identité (1), **caractérisé en ce qu'**il comprend:
- un dispositif de saisie (82) numérique d'image ;
- un module de traitement apte à déterminer des informations alphanumériques sur une image saisie et apte à identifier des propriétés de motifs dans des zones prédéterminées d'une image saisie, les motifs étant susceptibles de révéler une éventuelle altération de la photographie d'identité ;
- un module d'authentification (81), indiquant au module de traitement des zones prédéterminées à analyser pour l'identification des propriétés des motifs dans ces zones, décodant des informations codées par les propriétés de ces motifs, comparant les informations issues de l'image saisie aux informations décodées, et générant un signal représentatif de l'authenticité en fonction du résultat de la comparaison, et dans lequel les motifs sont constitués de lignes superposées avec la photographie d'identité et présentant des intersections de lignes, lesdites informations étant codées par la présence et la non-présence d'intersections des lignes dans lesdites zones prédéterminées (62)..

11. Système de test d'authenticité d'un document d'identité (1), comprenant en outre un dispositif de lecture (83) d'une puce (2) du document d'identité (1), le module d'authentification (81) comparant les informations décodées à des informations mémorisées dans la puce et générant un signal représentatif de l'authenticité en fonction du résultat de cette comparaison.

## Patentansprüche

1. Verfahren zur Erhöhung der Sicherheit von Ausweisdokumenten (1) mit Lichtbild (3) und alphanumerischen Vermerken (4) zum Inhaber des Ausweisdokuments, das folgende Schritte umfasst:
- Sammeln alphanumerischer Daten aus den alphanumerischen Vermerken (4), die auf dem Ausweisdokument stehen sollen;
- Kodierung der gesammelten alphanumerischen Daten durch Eigenschaften der Motive, die in den vorgegebenen Bereichen des Lichtbildes erscheinen sollen (3), wobei anhand der Motive eine etwaige Beschädigung des Lichtbildes festgestellt werden kann;
- Herstellung des Ausweisdokuments mit den besagten alphanumerischen Vermerken (4) und mit Lichtbild (3), auf dem gut sichtbar die Motive (6) mit den besagten Eigenschaften in den besagten vorgegebenen Bereichen erscheinen, wobei die Motive aus Linien bestehen, die über dem Lichtbild verlaufen und sich überschneiden, und die gesammelten alphanumerischen Daten durch das Vorhandensein oder das Nichtvorhandensein von Überscheidungen bei den Motiven in den besagten vorgegebenen Bereichen kodiert werden (62).

2. Verfahren zur Erhöhung der Sicherheit von Ausweisdokumenten gemäß Anspruch 1, bei dem die Farbe und Helligkeit der Motive entsprechend dem Untergrund angepasst werden, auf dem sie angeordnet sind.

3. Verfahren zur Erhöhung der Sicherheit von Ausweisdokumenten gemäß Anspruch 1, bei dem die Motive (6) in Bezug auf Farbe oder Helligkeit mit dem Lichtbild (3) kontrastieren, damit sie mit bloßem Auge gut zu erkennen sind.

4. Verfahren zur Erhöhung der Sicherheit von Ausweisdokumenten gemäß einem der vorgenannten Ansprüche, das eine Analyse von Farbgebung oder Farbintensität der vorgegebenen Bereiche des Lichtbildes (3) umfasst sowie die Erstellung von Motiven (6), die in Bezug auf Farbe oder Farbintensität in den vorgegebenen Bereichen mit dem Lichtbild kontrastieren.

5. Verfahren zur Erhöhung der Sicherheit von Ausweisdokumenten gemäß einem der vorgenannten Ansprüche, bei dem das Ausweisdokument (1) einen Chip (2) beinhaltet, wobei das Verfahren einen Schritt zur Aufzeichnung der alphanumerischen Vermerke, der gesammelten alphanumerischen Daten, der Lage der vorgegebenen Bereiche und/oder des Lichtbildes auf dem Chip umfasst.

6. Verfahren zur Erhöhung der Sicherheit von Ausweisdokumenten gemäß einem der vorgenannten Ansprüche, bei dem vor dem Schritt der Kodierung durch Eigenschaften der Motive zunächst ein Schritt zur Verschlüsselung der gesammelten Daten erfolgt.

7. Verfahren zur Erhöhung der Sicherheit von Ausweisdokumenten gemäß einem der vorgenannten Ansprüche, bei dem die vorgegebenen Bereiche des Lichtbildes (3) eine unterschiedliche Dichte an verschiedenen Stellen des Lichtbildes aufweisen.

8. Verfahren zur Erhöhung der Sicherheit von Ausweisdokumenten gemäß Anspruch 7, bei dem die vorgegebenen Bereiche eine geringere Dichte dort aufweisen, wo sich auf dem Lichtbild die Augen befinden (3).

9. Verfahren zur Erhöhung der Sicherheit gemäß einem der vorgenannten Ansprüche, das folgende Schritte umfasst:
- digitale Analyse des Lichtbildes zur Erstellung von Bildstatistiken;
- Kodierung der erstellten Bildstatistiken durch Eigenschaften der Motive in bestimmten vorgegebenen Bereichen.

10. System (8) zur Prüfung der Echtheit eines Ausweisdokuments (1), das **dadurch gekennzeichnet ist, dass** es Folgendes umfasst:
- eine Vorrichtung (82) für die digitale Bilderfassung;
- ein Verarbeitungsmodul, das für die Ermittlung der alphanumerischen Daten auf einem erfassten Bild sowie für die Identifizierung der Eigenschaften der Motive in den vorgegebenen Bereichen eines erfassten Bildes geeignet ist, wobei anhand der Motive eine etwaige Beschädigung des Lichtbildes festgestellt werden kann;
- ein Authentifizierungsmodul (81), das dem Verarbeitungsmodul die vorgegebenen Bereiche anzeigt, die zur Identifizierung der Eigenschaften der Motive in diesen Bereichen analysiert werden sollen, das die durch Eigenschaften der Motive kodierten Daten entschlüsselt, die Daten aus dem erfassten Bild mit den entschlüsselten Daten vergleicht und ein Signal erzeugt, das abhängig vom Ergebnis des Vergleichs die Echtheit anzeigt, und bei dem die Motive aus Linien bestehen, die über dem Lichtbild verlaufen und sich überschneiden, wobei die besagten Daten durch das Vorhandensein und das Nichtvorhandensein von Überscheidungen der Linien in den besagten vorgegebenen Bereichen kodiert sind (62).

11. System zur Prüfung der Echtheit von Ausweisdokumenten (1), das eine Vorrichtung zum Auslesen (83) des Chips (2) eines Ausweisdokuments (1) und ein Authentifizierungsmodul (81) umfasst, das die entschlüsselten Daten mit den auf dem Chip gespeicherten Daten vergleicht und ein Signal erzeugt, das abhängig vom Ergebnis des Vergleichs die Echtheit anzeigt.

## Claims

1. A method for securing an identification document (1) comprising an identification photograph (3) and alphanumeric particulars (4) relating to the holder of the identification document, comprising the following steps:
- collection of alphanumeric information from the alphanumeric particulars (4) intended to feature on the identification document;
- encoding the alphanumeric information collected using properties of patterns intended to feature in predetermined areas of the identification photograph (3), where the patterns are likely to reveal any alteration of the identification photograph;
- making the identification document so that it comprises said alphanumeric particulars (4) and the identification photograph (3) visibly bearing the patterns (6) with said properties in said predetermined zones, **characterised in that** the patterns are made up of lines superimposed on the identification photograph with line intersections, so that said collected alphanumeric information is coded by the presence and absence of intersections of patterns in said predetermined zones (62).

2. A method for securing an identification document according to claim 1, where the colour or brightness of the patterns is advantageously adapted to the background on which they are superimposed.

3. A method for securing an identification document according to claim 1, where the colour or brightness of the patterns (6) are in contrast in relation to the identification photograph (3) so as to be easily visible to the naked eye.

4. A method for securing an identification document according to any of the foregoing claims, comprising an analysis of the colours or intensity of predetermined zones of the identification photograph (3) and comprising the making of patterns (6) with a colour or intensity contrast in relation to the identification photograph in predetermined zones.

5. A method for securing an identification document according to any of the foregoing claims, wherein the identification document (1) comprises a microchip (2), where the method comprises a step for writing the alphanumeric particulars, the alphanumeric information collected, the location of the predetermined zones and/or the identification photograph in the microchip.

6. A method for securing an identification document according to any of the foregoing claims, wherein the step of encoding with the properties of patterns is preceded by a step where the collected information is encrypted.

7. A method for securing an identification document according to any of the foregoing claims, wherein the predetermined zones of the identification photograph (3) have a variable density at different locations of the identification photograph.

8. A method for securing an identification document according to claim 7, wherein the predetermined zones are not as dense at the eyes of the identification photograph (3).

9. A securing method according to any of the foregoing claims, comprising steps consisting in:
- digitally analysing the identification photograph to extract image statistics;
- encoding the image statistics extracted with pattern properties in some of the predetermined zones.

10. A system (8) for testing the authenticity of an identification document (1), **characterised in that** it comprises:
- a digital image capturing device (82);
- a processing module suitable for determining alphanumeric information on a captured image and suitable for identifying pattern properties in predetermined zones of a captured image, where the patterns are likely to reveal any alteration of the identification photograph;
- an authentication module (81), which indicates to the processing module the predetermined zones to analyse in order to identify the properties of patterns in those zones, which decodes the information encoded by the properties of those patterns, which compares information from the captured image with the decoded information and generates a signal representative of authenticity depending on the result of the comparison, where the patterns are made up of lines superimposed with the identification photograph and have line intersections, where said information is encoded by the presence and absence of line intersections in said predetermined zones (62).

11. A system to test the authenticity of an identification document (1) further comprising a device that reads (83) a microchip (2) of the identification document (1), where the authentication module (81) compares the decoded information with information saved in the microchip and generates a signal representative of authenticity depending on the result of the comparison.
